# EUROPÄISCHE PATENTSCHRIFT

(11) **EP 2 090 797 B1**
(45) Veröffentlichungstag und Bekanntmachung des Hinweises auf die Patenterteilung: **12.12.2012**
(21) Anmeldenummer: 09150927.3
(22) Anmeldetag: 20.01.2009
(51) Int. Cl.: F16D 48/06

(54) **Ansteuerverfahren für eine Fahrzeugkupplung**
Control method for a vehicle clutch
Procédé de commande pour un embrayage de véhicule

(30) Priorität: 14.02.2008 DE 102008009094
(43) Veröffentlichungstag der Anmeldung: 19.08.2009
(73) Patentinhaber: GETRAG Getriebe- und Zahnradfabrik Hermann Hagenmeyer GmbH & Cie KG, 74199 Untergruppenbach (DE)
(72) Erfinder: Stepper, Thorsten, 74638 Waldenbuch (DE); Meissner, Jörg, 74626 Bretzfeld (DE); Trutschel, Ralf, 71717 Beilstein (DE)
(74) Vertreter: Witte, Weller & Partner

(56) Entgegenhaltungen:
- EP-A2- 1 757 835
- WO-A1-01/20200
- WO-A1-02/25130
- DE-A1- 10 150 597
- DE-A1-102004 040 207
- GB-A- 2 225 076
- US-A1- 2002 119 865
- US-A1- 2004 159 523
- US-A1- 2005 283 297
- US-B2- 6 951 526
- US-H1- H2 031

## Beschreibung

Die vorliegende Erfindung betrifft ein Verfahren zum Ansteuern einer Kupplung eines Fahrzeugantriebsstranges, insbesondere eines Fahrzeugantriebsstranges mit einem Doppelkupplungsgetriebe.

Doppelkupplungsgetriebe sind allgemein bekannt. Sie beinhalten eine Doppelkupplungsanordnung mit zwei parallelen Reibkupplungen und ein Stufengetriebe mit zwei parallelen Teilgetrieben. Einem Zweig mit einer ersten Reibkupplung und einem ersten Teilgetriebe sind die ungeraden Gangstufen zugeordnet. Dem anderen Zweig mit der zweiten Reibkupplung und dem zweiten Teilgetriebe sind die geraden Gangstufen zugeordnet. Eingangsseitig sind die Reibkupplungen mit einem Antriebsmotor verbunden, beispielsweise einem Verbrennungsmotor, einer Hybridantriebseinheit oder ähnliches. Die Teilgetriebe sind in der Regel als Stirnradgetriebe realisiert. Die Verbindung der Reibkupplungsanordnung mit dem Teilgetrieben erfolgt über eine Wellenanordnung mit einer Innenwelle und einer konzentrisch hierzu angeordneten Hohlwelle.

Durch überschneidende Betätigung der zwei Reibkupplungen können Gangwechsel ohne Zugkraftunterbrechung durchgeführt werden. Die Betätigung der Reibkupplungen erfolgt automatisiert. Die hierzu verwendeten Aktuatoren müssen dabei insbesondere bei der Übergabe des Antriebsmomentes von der einen Reibkupplung auf die andere Reibkupplung präzise angesteuert werden, um einen ruckfreien Gangwechsel zu gewährleisten.

Aus dem Dokument GB 2 225 076 A ist ein Kupplungssteuerungssystem bekannt, bei dem ein Kupplungsdruck mittels einer elektromagnetisch angesteuerten Ventilanordnung eingestellt wird. Einer Steuereinrichtung wird ein Signal von einem Drucksensor zugeführt. Falls ein Drucksensor nicht verfügbar ist, wird vorgeschlagen, den hydraulischen Leitungsdruck als Funktion einer Drosselposition abzuschätzen.

Das Dokument US 2005/0283297 A1 betrifft ein System zur Drucksteuerung, mit einem Ventil zum Einstellen einer Fluidmenge in einer Übertragungskupplung und mit einem Druckwandler zum Messen des Druckes in der Getriebekupplung.

Schließlich betrifft das Dokument DE 10 2004 040 207 A1 eine Vorrichtung zum automatischen Betätigen einer Getriebekupplung abhängig von einer Steuergröße, wobei die Steuergröße während eines Öffnungsvorganges der ersten Getriebekupplung zumindest ein Extremum durchläuft. Aus diesem Dokument ist es auch bekannt, mit Hilfe eines dynamischen Kupplungsmodells, das die Tiefpasseigenschaften und die Verzögerung des Steuerdrucks im Verhältnis zum Steuerstrom berücksichtigt, einen Losreißzeitpunkt im Voraus und abhängig von einer Getriebetemperatur zu berechnen.

Vor dem obigen Hintergrund ist es die Aufgabe der Erfindung, ein verbessertes Verfahren zum Ansteuern einer Kupplung eines Fahrzeugantriebstrangs anzugeben, mit dem insbesondere genauer und/oder schneller angesteuert werden kann.

Die obige Aufgabe wird gemäß Anspruch 1 gelöst durch ein Verfahren zum Ansteuern einer Kupplung eines Fahrzeugantriebsstranges, wobei ein Regler einer elektronischen Steuereinheit ein elektrisches Sollsignal erzeugt, das einem Solldruck entspricht, mit dem die Kupplung beaufschlagt werden soll, wobei die Steuereinheit von einem Sensor ein elektrisches Istsignal erhält, das einem Istdruck entsprechen soll, mit dem die Kupplung beaufschlagt wird, wobei der Sensor den Druck an einem Messort misst, der über eine Übertragungsstrecke mit einem Beaufschlagungsort verbunden ist, an dem die Kupplung mit einem Kupplungsdruck beaufschlagt wird, dadurch gekennzeichnet dass das Istsignal ein Übertragungsglied mit Verzögerungseigenschaft durchläuft, bevor es dem Regler zugeleitet wird, um das Problem zu lösen, das daher rührt, dass zwischen der Kupplung und dem Drucksensor eine Übertragungsstrecke mit dynamisch nicht zu vernachlässigenden hydraulischen Komponenten andgeordnet ist.

Mit diesem Verfahren wird ein Problem gelöst, das daher rührt, dass zwischen der Kupplung und dem Drucksensor eine Übertragungsstrecke mit dynamisch nicht zu vernachlässigenden Komponenten angeordnet ist. Bei hydraulischen Kupplungen können in der Übertragungsstrecke beispielsweise Drehdurchführungen, Hydraulikleitungen etc. angeordnet sein, die einen dynamischen Druckabfall generieren.

Besonders relevant ist dies beim sogenannten "Füllen" der Kupplung. Dies ist der Vorgang, bei dem eine Kupplung von einem geöffneten Zustand in einen Zustand versetzt wird, bei dem die Kupplung sich im sogenannten Eingriffspunkt ("Kisspunkt") befindet. Dieser Punkt ist definiert als ein Wert, bei dem die Kupplung bereits ein feststehendes, in der Regel kleines Drehmoment übertragen kann.

Im Stand der Technik wird zum Füllen der Kupplung als Sollsignal ein Sprungsignal erzeugt. Sobald der Sensor für einen gewissen Zeitraum den geforderten Solldruck misst, wird der Füllvorgang abgebrochen, da dann angenommen wird, dass sich die Kupplung im Eingriffspunkt befindet.

Im Stand der Technik war jedoch die Genauigkeit bzw. die Zuordnung der Wertepaare von Sollwert und Istwert häufig nicht zureichend, so dass der weitere Schließvorgang der Kupplung häufig nicht präzise genug eingeleitet werden konnte. Dies konnte insbesondere bei Doppelkupplungsgetrieben in der Überschneidungsphase zu ruckartigem Verhalten führen.

Durch die erfindungsgemäße Maßnahme, das Istsignal zunächst einem Übertragungsglied mit Verzögerungseigenschaft zuzuführen, bevor es dem Regler zugeleitet wird, kann dieses Problem beseitigt werden. Hierdurch kann insbesondere eine größere Regeldifferenz zwischen dem Sollwert und dem jeweiligen Istwert erreicht werden. Der Regler kann hierdurch besser arbeiten.

Der Begriff der "Verzögerungseigenschaft" soll vorliegend breit verstanden werden. Eine Verzögerung soll demgemäß bei einem reinen Verzögerungsglied erreicht werden. In gleichem Maße kann diese Verzögerungseigenschaft jedoch auch durch ein Übertragungsglied reduziert werden, das beispielsweise eine PT1-Funktion nachbildet (PT1-Glied).

Auch andere Arten von Übertragungsgliedern sind möglich, sofern diese eine gewisse Verzögerungs- und/oder Dämpfungseigenschaft besitzen.

Von besonderem Vorzug ist es, wenn die Verzögerungseigenschaft des Übertragungsgliedes eine Funktion der Temperatur ist.

Dabei wird das Maß der Verzögerung bei höheren Temperaturen vorzugsweise kleiner eingestellt, da das System dann eher in einem eingeschwungenen Zustand ist und ohnehin präziser arbeiten kann.

Die Temperatur kann beispielsweise die Temperatur eines Fluides wie eines Öls sein, mit dem die Kupplung angesteuert wird. Alternativ kann die Temperatur auch die Temperatur eines elektrischen Aktuatormotors oder einer zugeordneten Leistungsstufe sein. Die Temperatur ist jedoch bevorzugt eine Temperatur, die in einem Zusammenhang mit der Temperatur der Kupplung selber steht, vorzugsweise in einem proportionalen Zusammenhang.

Gemäß einer weiteren bevorzugten Ausführungsform ist die Verzögerungseigenschaft des Übertragungsgliedes eine Funktion des Solldruckes.

Bei höheren Drücken wird das Maß der Verzögerung des Übertragungsgliedes entsprechend kleiner eingestellt, da in diesem Fall der Regler ohnehin eine relativ hohe Regeldifferenz erhält.

Anstelle des Solldruckes kann auch der Betrag des Differenzdruckes zwischen Ausgangssdruck und einem Solldruck herangezogen werden.

Erfindungsgemäß wird die Kupplung hydraulisch betätigt. Das Istsignal ist dabei ein Drucksignal eines Drucksensors.

Bei einem hydraulischen Aktuator kann der Einfluss einer hydraulischen Übertragungsstrecke besonders groß sein, so dass die Erfindung besondere Vorzüge besitzt.

Ferner kann das Sollsignal mit einem höherfrequenten Signal (Dither) moduliert wird, um Hystereseeffekte zu minimieren.

Es hat sich gezeigt, dass die Modulation des Sollsignals mit einem höherfrequenten Signal Hystereseeffekte der Kupplung minimieren kann. Es lässt sich dadurch erreichen, dass der Kupplungskolben am Ende der Füllphase reproduzierbar an der gleichen Position steht. Die nachfolgende Druckregelung (beispielsweise für einen Überschneidungsvorgang bei einem Doppelkupplungsgetriebe) kann dadurch besser abgestimmt werden.

Insgesamt ist es erfindungsgemäß vorteilhaft, wenn das Sollsignal während einer Füllphase der Kupplung ausgehend von einem geöffneten Grundzustand der Kupplung in Richtung eines Eingriffspunktes der Kupplung erzeugt wird.

Hierdurch versteht sich, dass das erfindungsgemäße Verfahren insbesondere während der Füllphase anwendbar ist. Generell kann das erfindungsgemäße Verfahren jedoch auch bei anderen Phasen der Kupplungsansteuerung verwendet werden.

Von besonderem Vorteil ist es, wenn das Sollsignal mit dem höherfrequenten Signal zumindest während eines Abschnittes der Füllphase moduliert wird.

Dies ist vorzugsweise ein Anfangsabschnitt der Füllphase, derart, dass die Modulation lediglich im sogenannten 'weichen" Bereich der Kupplung eingesetzt wird. Der "weiche" Bereich ist der Bereich der Kupplungsansteuerung, bei dem die Kupplung noch kein Drehmoment übertragen kann. Demzufolge wird die Modulation des Sollsignals vorzugsweise eine bestimmte Zeit vor dem prognostizierten Erreichen des Eingriffspunktes abgebrochen, bei dem die Drehmomentübertragung eine bestimmte Höhe überschreitet.

Gemäß einer weiteren bevorzugten Ausführungsform wird das Sollsignal von der Steuereinheit während einer Füllphase der Kupplung ausgehend von einem geöffneten Grundzustand der Kupplung in Richtung eines Eingriffspunktes der Kupplung zunächst in Form eines ungeregelten, d.h. gesteuerten Signals und anschließend in Form eines geregelten Signals abhängig von einem Istwert erzeugt.

Durch die Maßnahme, die Füllphase zunächst durch ein ungeregeltes, d.h. gesteuertes Signal als Sollsignal durchzuführen, kann man eine Füllcharakteristik erzielen, die zu einem schnelleren Befüllen der Kupplung führt.

Der Gedanke, das Sollsignal zum Füllen der Kupplung zunächst durch ein ungeregeltes, gesteuertes Signal vorzugeben und erst anschließend in einen Regelungsvorgang überzugehen, wird alsvorteilhaft und unabhängig von der Verwendung eines Übertragungsgliedes mit Verzögerungsei angesehen.

Dabei ist es von besonderem Vorteil, wenn das ungeregelte Signal ein überhöhtes Signal ist.

Unter einem überhöhten Signal wird ein Signal verstanden, das so gesteuert wird, dass es zumindest abschnittsweise über angestrebtem Sollwert zum Erreichen des Eingriffspunktes der Kupplung liegt.

Beispielsweise kann das überhöhte gesteuerte Signal eine PDT1-Charakteristik erhalten, also anfangs einen hohen Spitzenwert und dann eine abfallende Kurve. Die abfallende Kurve kann ähnlich einem PT1-Glied oder ähnlich einer PI-Funktion erfolgen.

Die eigentliche Regelung des Signals in der anschließenden Phase kann beispielsweise über einen PI-Regler erfolgen.

Insgesamt versteht sich, dass die vorliegende Erfindung auf jede Art von Reibkupplung anwendbar ist, insbesondere auf Reibkupplungen von Fahrzeuggetrieben wie beispielsweise Anfahrkupplungen. Die Kupplung kann eine Trockenkupplung sein, ist jedoch vorzugsweise eine nasslaufende Kupplung wie eine nasslaufende Lamellenkupplung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeuges mit einem Antriebsstrang, der eine Kupplung aufweist, die erfindungsgemäß ansteuerbar ist;
- Fig. 2: ein Diagramm von Signalen bei der Ansteuerung einer Fahrzeugkupplung während einer Füllphase, und zwar gemäß einem ersten Aspekt der vorliegenden Erfindung; und
- Fig. 3: ein der Fig. 2 vergleichbares Diagramm, bei dem die Füllphase unter Anwendung der Verfahren gemäß dem ersten und dem zweiten Aspekt der Erfindung durchgeführt wird.

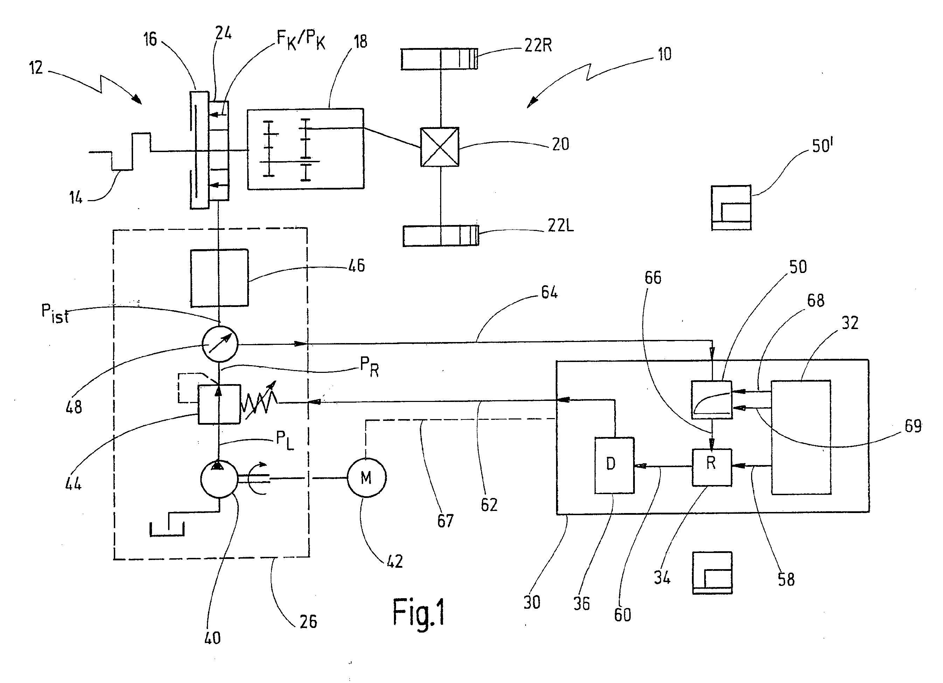

In Fig. 1 ist ein Kraftfahrzeug wie ein Personenkraftwagen generell mit 10 bezeichnet. Das Kraftfahrzeug 10 weist einen Antriebsstrang 12 mit einem Antriebsmotor 14 auf. Der Antriebsmotor 14 kann beispielsweise ein Verbrennungsmotor oder eine Hybridantriebseinheit sein. Der Antriebsstrang 12 weist ferner eine Reibkupplung 16 auf, die vorliegend als einzelne Kupplung in Form einer Anfahrkupplung dargestellt ist. Entsprechend weist der Antriebsstrang 12 ein Stufengetriebe 18, beispielsweise in Form eines Stirnrad- bzw. Vorgelegegetriebes auf. Der Ausgang des Stufengetriebes 18 ist mit einem Achsgetriebe 20 verbunden, das die Antriebskraft auf angetriebene Räder 22L, 22R des Kraftfahrzeugs 10 verteilt.

Obgleich vorliegend ein Antriebsstrang 12 mit nur einer Reibkupplung 16 und einem Stufengetriebe 18 dargestellt ist, versteht sich, dass die vorliegende Erfindung bevorzugt bei Doppelkupplungsgetrieben angewendet wird, die zwei derartige Reibkupplungen und zwei Teilgetriebe aufweisen. Die nachstehend beschriebenen Verfahren zur Ansteuerung der einzelnen Reibkupplung 16 lassen sich bei dem Doppelkupplungsgetriebe auf beide Kupplungen jeweils getrennt anwenden.

Obwohl es möglich ist, die Reibkupplung 16 mittels eines Elektromotors oder eines Elektromagneten (also elektrisch) zu betätigen, erfolgt im vorliegenden Fall eine hydraulische Betätigung mittels eines hydraulischen Aktuators 24. Dieser weist üblicherweise einen Kolben auf, der die Kupplung über ein Hydraulikfluid (beispielsweise ein ATF-Ö1) andrückt, und zwar mit einer Kraft F_{K}, die proportional ist zu einem Kupplungsdruck P_{K}.

Der hydraulische Aktuator 24 wird über einen Hydraulikkreis 26 angesteuert. Ferner weist das Kraftfahrzeug 10 eine elektrische Steuereinheit 30 auf, mittels der der Hydraulikkreis 26 ansteuerbar ist.

Die elektrische Steuereinheit 30 weist eine Steuereinrichtung 32, beispielsweise in Form eines Mikrocontrollers und einen Regler 34 auf. Der Regler 34 kann Teil der Steuereinrichtung 32 sein oder als separates Bauteil innerhalb der Steuereinheit 30 vorgesehen sein. Ferner beinhaltet die Steuereinheit 30 einen Digital/Analog-Wandler 36, der digitale Regelsignale des Reglers 34 in analoge Signale umsetzt, die dem Hydraulikkreis 26 zugeführt werden.

Der Hydraulikkreis 26 weist eine Fluidpumpe 40 auf, die in Verbindung mit einem Druckregelventil einen Leitungsdruck P_{L} erzeugt. Das Fluid wird dabei aus einem nicht näher bezeichneten Tank angesaugt. Die Pumpe 40 kann dann beispielsweise mittels eines elektrischen Motors 42 angetrieben sein (oder als Nebenaggregat über die Kurbelwelle des Antriebsmotors 14).

Das von der Pumpe 40 bereitgestellte Fluid kann zur Kühlung der Reibkupplung 16 verwendet werden. Aus Gründen einer übersichtlicheren Darstellung sind diese Leitungen nicht dargestellt. Der Hydraulikkreis 26 weist ferner ein Druckregelventil (insbesondere Druckreduzierventil) 44 auf, das aus dem Leitungsdruck P_{L} einen geregelten Druck P_{R} für die Ansteuerung des hydraulischen Aktuators 24 erzeugt. Der geregelte Druck P_{R} wird über eine hydraulische Übertragungsstrecke 46 (beispielsweise eine Drehdurchführung, hydraulische Leitungen, etc.) dem Aktuator 24 zur Verfügung gestellt.

Ferner beinhaltet der Hydraulikkreis 26 einen Drucksensor 48, der in Zuordnung zu dem Druckregelventil 44 vorgesehen ist. Mit anderen Worten ist die hydraulische Übertragungsstrecke 46 zwischen dem Drucksensor 48 und dem Aktuator 24 angeordnet.

Die Steuereinheit 30 weist ferner ein Übertragungsglied 50 auf, mit dem ein Signal von dem Drucksensor 48 einer Verzögerung bzw. Dämpfung unterzogen wird, bevor dieses Signal dem Regler 34 zugeführt wird. Das Übertragungsglied 50 kann dabei Teil der Steuereinrichtung 32 sein, also durch Software nachgebildet sein.

Die Steuereinrichtung 32 erzeugt aufgrund übergeordneter Steuerparameter ein Signal für einen Solldruck 58. Dieses Signal wird dem Regler 34 zugeleitet. Der Regler 34 erzeugt ein digitales Sollsignal 60, das in dem Digital/Analogwandler 36 in ein analoges Sollsignal 62 umgesetzt wird. Das analoge Sollsignal 62 wird dem Druckregelventil 44 zugeführt und steuert den geregelten Druck P_{R}.

Der Drucksensor 48 erzeugt ein Istsignal 64 (P_{Ist}), das in das Übertragungsglied 50 eingegeben wird. In dem Übertragungsglied 50 erfährt das Istsignal 64 eine Verzögerung bzw. Dämpfung. Das auf diese Art und Weise korrigierte Istsignal 66 wird dem Regler 34 zugeführt.

Ferner kann die Steuereinheit 30 auch dazu ausgelegt sein, ein Motorsteuersignal 67 für den elektrischen Motor 42 bereitzustellen. Auch ist in Fig. 1 gezeigt, dass die Steuereinrichtung 32 die Verzögerungseigenschaft des Übertragungsgliedes 50 in Abhängigkeit von der Temperatur einstellt (Temperatureinstellsignal 68). Alternativ oder kumulativ kann die Verzögerungseigenschaft des Übertragungsgliedes 50 auch in Abhängigkeit von dem jeweils erzeugten Solldruck 58 eingestellt werden (durch ein Solldruckeinstellungssignal 69 gezeigt).

Das Übertragungsglied 50 kann generell im Rahmen der Ansteuerung der Reibkupplung 16 verwendet werden. Bevorzugt wird es jedoch dann verwendet, wenn die Kupplung 16 gefüllt wird, also von einem geöffneten Zustand in einen Zustand versetzt wird, bei dem der Eingriffspunkt der Kupplung erreicht ist. In anderen Fällen kann das Übertragungsglied 50 auch umgegangen werden, falls dies erforderlich ist.

Durch das Übertragungsglied 50 kann eine exakte Regeldifferenz zwischen Solldruck und dem tatsächlichen Druck im Kupplungskolbenraum anhand des gemessenen Signals 64 errechnet werden.. Hierdurch kann der Regler besser arbeiten. Bei höheren Temperaturen kann die Verzögerungseigenschaft eher verringert werden. In entsprechender Weise kann bei höheren Solldrücken (und/oder bei höheren Istdrücken nach dem Verzögerungsglied 66) die Verzögerungseigenschaft ebenfalls verringert werden.

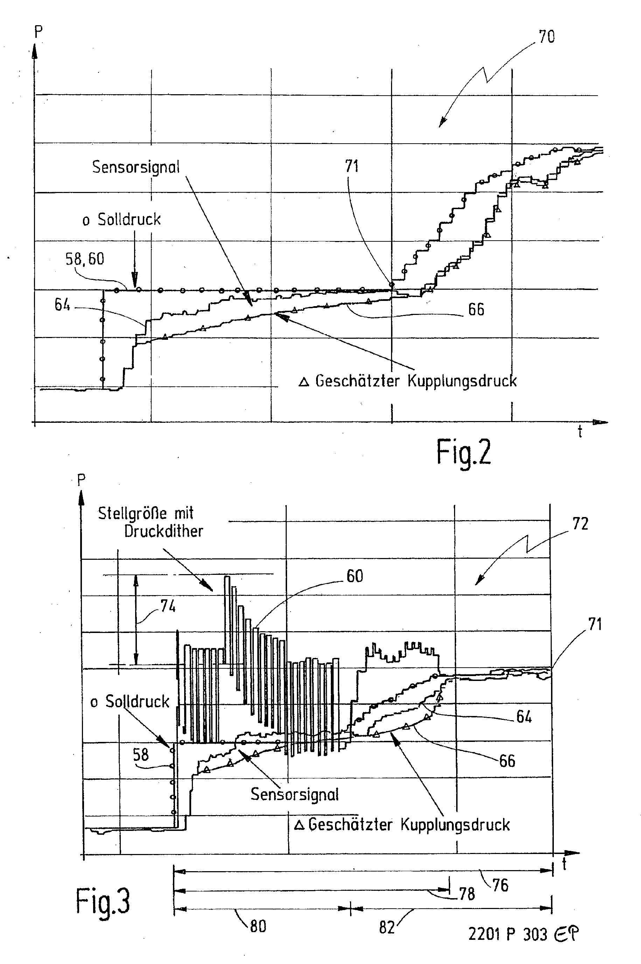

In den Figuren 2 und 3 ist jeweils ein Füllvorgang einer Kupplung 16 über der Zeit t dargestellt.

In Fig. 2 ist ein Diagramm 70 gezeigt, bei dem der Füllvorgang durch eine Erhöhung des Solldruckes mittels eines Sprungsignales eingeleitet wird. Die Füllphase endet im Wesentlichen zu einem Zeitpunkt 71. Das Diagramm 70 stellt ferner das von dem Drucksensor 48 erzeugte Istsignal 64 dar (Sensorsignal). Ferner ist in dem Diagramm 70 der aufgrund des Übertragungsgliedes 50 ermittelte, korrigierte Istdruck 66 dargestellt ("geschätzter Kupplungsdruck").

Man erkennt, dass unmittelbar nach Beginn der Füllphase eine relativ große Regelabweichung realisiert wird. Dies führt dazu, dass der Regler 34 besser arbeiten kann.

Das Übertragungsglied 50 mit seiner Verzögerungs- bzw. Dämpfungseigenschaft bildet quasi die Übertragungsstrecke 46 nach. Das Übertragungsglied 50 erfüllt folglich die Funktion eines Druckbeobachters, durch den der tatsächliche Druck in dem Aktuator 24 geschätzt wird. Denn durch die Übertragungsstrecke 46 wird der zu einem bestimmten Zeitpunkt im Bereich des Messortes des Sensors 48 vorhandene geregelte Druck P_{R} erst eine gewisse Zeit später in dem hydraulischen Aktuator 24 als Kupplungsdruck P_{K} "ankommen". Durch diese dynamische Beeinflussung des Druckes durch die Übertragungsstrecke 46 entspricht der von dem Sensor 48 gemessene Istdruck P_{Ist} nicht dem tatsächlichen Druck P_{K} in dem Aktuator 24. Durch das Übertragungsglied 50 kann dies kompensiert werden. Dadurch, dass das Übertragungsglied 50 eine Verzögerungseigenschaft besitzt, die eine Funktion der Temperatur und/oder des Solldruckes ist (Pfeile 68, 69), kann das dynamische Verhalten der Übertragungsstrecke 46 realistischer abgeschätzt und folglich kompensiert werden.

In Fig. 3 ist ein Diagramm 72 dargestellt, das hinsichtlich des generellen Ablaufes dem Diagramm 70 der Fig. 2 entspricht.

Bei dem Diagramm 72 wird aus dem Solldruck 58 in dem Regler 34 (oder bereits in der Steuereinrichtung 32) ein Sollsignal (Stellgröße mit Druckbildner) 60 erzeugt, das mit einem hochfrequenten Signal mit einer Modulationsamplitude 74 moduliert ist. Mit anderen Worten wird dem Sollsignal ein "Dither"-Signal überlagert. Hierdurch können Hystereseeffekte in dem Aktuator 24 minimiert werden. Es lässt sich erreichen, dass die Position der Kupplung am Ende der Füllphase reproduzierbar an der gleichen Position steht. Die nachfolgende Druckregelung kann besser abgestimmt werden.

Die Füllphase der Kupplung 16 ist in Fig. 3 mit 76 dargestellt und dauert von dem Anheben des Solldruckes bis zum Erreichen des Eingriffspunktes (bei 71).

Die Modulation des Sollsignals 60 erfolgt dabei in einer Modulationsphase 78, die deutlich vor dem Eingriffspunkt 71 endet. Hierdurch wird die Modulation lediglich in einem "weichen" Bereich der Kupplung ausgeübt, so dass keine Einflüsse auf den Antriebsstrang ausgeübt werden können (insbesondere keine Übertragung von Vibrationen auf den Antriebsstrang).

Ferner wird die Füllphase 76 bei dem Ansteuerungsverfahren der Fig. 3 in eine Steuerphase 80 und eine Regelphase 82 unterteilt. In der anfänglichen Steuerphase 80 wird das Sollsignal 60 nicht im Wege einer Rückkopplung geregelt sondern gesteuert vorgegeben. Das Signal kann dabei beispielsweise die Charakteristik einer PDT1-Funktion besitzen. Dabei erhält das Sollsignal 60 zu Beginn der Steuerphase 80 einen relativ hohen Spitzenwert, der deutlich über dem Solldruck liegt. Ausgehend hiervon kann das Signal dann wieder leicht abfallen, beispielsweise nach der Art eines PT1-Gliedes oder eines PI-Gliedes. Die Steuerphase 80 endet ebenfalls deutlich vor Erreichen des Eingriffspunktes, insbesondere noch vor Beendigung der Modulationsphase 78. In der anschließenden Regelphase 82 wird in dem Regler 34 ein Regelvorgang unter Verwendung des Istsignals 64 (oder des korrigierten Istsignals 66) durchgeführt. In der Regelphase 82 kann die Modulationsamplitude 74 deutlich verringert sein.

Durch das Aufteilen der Füllphase in eine Steuerphase 80 und eine Regelphase 82 kann dem System durch das gesteuerte Sollsignal 60 ein relativ schneller Anstieg der entsprechenden Druckwerte aufgeprägt werden (des geregelten Druckes P_{R} und folglich auch des Kupplungsdruckes P_{K}). Durch die anschließende Regelphase 82 kann eine exakte Positionierung bzw. Einrichtung der Kupplung 16 für den Eingriffspunkt 71 erfolgen.

## Patentansprüche

1. Verfahren zum Ansteuern einer Kupplung (16) eines Fahrzeugantriebsstranges (12), wobei ein Regler (34) einer elektronischen Steuereinheit (30) ein elektrisches Sollsignal (60, 62) erzeugt, das einem Solldruck (58) entspricht, mit dem die Kupplung (16) beaufschlagt werden soll, wobei die Steuereinheit (30) von einem Sensor (48) ein elektrisches Istsignal (64) erhält, das einem Istdruck entsprechen soll, mit dem die Kupplung (16) beaufschlagt wird, wobei der Sensor (48) den Druck an einem Messort misst, der über eine Übertragungsstrecke (46) mit einem Beaufschlagungsort (24) verbunden ist, an dem die Kupplung (16) mit einem Kupplungsdruck (Pₖ) beaufschlagt wird, **dadurch gekennzeichnet dass** das Istsignal (64) ein Übertragungsglied (50) mit Verzögerungseigenschaft durchläuft, bevor es dem Regler (34) zugeleitet wird, um das Problem zu lösen, das daher rührt, dass zwischen der kupplung und dem Drucksensor eine Übertragungsstrecke (46) dynamisch mit nicht zu vernachlässigenden hydraulischen Komponenten angeordnet ist.

2. Ansteuerverfahren nach Anspruch 1, wobei das Übertragungsglied ein PT1-Glied (50) aufweist.

3. Ansteuerverfahren nach Anspruch 1 oder 2, wobei das Übertragungsglied ein einfaches Verzögerungsglied (50') aufweist.

4. Ansteuerverfahren nach einem der Ansprüche 1 - 3, wobei die Verzögerungseigenschaft des Übertragungsgliedes (50) eine Funktion der Temperatur ist.

5. Ansteuerverfahren nach einem der Ansprüche 1 - 4, wobei die Verzögerungseigenschaft des Übertragungsgliedes (50) eine Funktion des Solldruckes ist.

6. Ansteuerverfahren nach einem der Ansprüche 1 - 5, wobei die Kupplung (16) fluidisch betätigt wird und wobei das Istsignal ein Drucksignal (64) eines Drucksensors (48) ist.

7. Verfahren nach einem der Ansprüche 1 - 6, wobei das Sollsignal (60, 62) während einer Füllphase (76) der Kupplung (16) ausgehend von einem geöffneten Grundzustand der Kupplung (16) in Richtung eines Eingriffpunktes (71) der Kupplung (16) erzeugt wird.

8. Verfahren nach Anspruch 7, wobei das Sollsignal (60, 62) mit einem höherfrequenten Signal (Dither) (74) moduliert wird, um Hystereseeffekte zu minimieren und wobei das Sollsignal (60, 62) mit dem höherfrequenten Signal zumindest während eines Abschnittes (78) der Füllphase (76) moduliert wird.

9. Verfahren nach einem der Ansprüche 1 -89, wobei das Sollsignal (60, 62) von der Steuereinheit (30) während einer Füllphase (76) der Kupplung (16) ausgehend von einem geöffneten Grundzustand der Kupplung (16) in Richtung eines Eingriffpunktes (71) der Kupplung (16) zunächst (80) in Form eines ungeregelten Signals und anschließend (82) als geregeltes Signal abhängig von einem Istwert (64, 66) erzeugt wird.

10. Verfahren nach Anspruch 9, wobei das ungeregelte Signal ein überhöhtes Signal ist.

## Claims

1. Method for activating a clutch (16) of a vehicle drive train (12), a controller (34) of an electronic control unit (30) generating an electrical desired-value signal (60, 62) corresponding to a desired pressure (58) with which the clutch (16) is to be acted upon, the control unit (30) receiving from a sensor (48) an electrical actual-value signal (64) which is to correspond to an actual pressure with which the clutch (16) is acted upon, the sensor (48) measuring the pressure at a measurement location which is connected via a transfer link (46) to an action location (24) at which the clutch (16) is acted upon with a clutch pressure (Pₖ),
**characterized in that** the actual-value signal (64) passes through a transfer element (50) having a delay property before it is delivered to the controller (34), so as to solve the problem which arises from the fact that a transfer link with components which cannot be ignored in dynamic terms is arranged between the clutch and the pressure sensor.

2. Activation method according to claim 1, the transfer element having a PT1 element (50).

3. Activation method according to claim 1 or 2, the transfer element having a simple delay element (50').

4. Activation method according to one of claims 1 - 3, the delay property of the transfer element (50) being a function of the temperature.

5. Activation method according to one of claims 1 - 4, the delay property of the transfer element (50) being a function of the desired pressure.

6. Activation method according to one of claims 1 - 5, the clutch (16) being actuated fluidically, and the actual-value signal being a pressure signal (64) from a pressure sensor (48).

7. Method according to one of claims 1 - 6, the desired-value signal (60, 62) being generated, during a filling phase (76) of the clutch (16), starting from an open basic state of the clutch (16) in the direction of an engagement point (71) of the clutch (16).

8. Method according to claim 7, the desired-value signal (60, 62) being modulated with a higher-frequency signal (dither) (74) in order to minimize hysteresis effects, wherein the desired-value signal (60, 62) is modulated with the higher-frequency signal at least during a segment (78) of the filling phase (76).

9. Method according to one of claims 1 - 8, the desired-value signal (60, 62) being generated, during a filling phase (76) of the clutch (16), by the control unit (30), starting from an open basic state of the clutch (16) in the direction of an engagement point (71) of the clutch (16), first (80) in the form of an unregulated signal and subsequently (82) as a regulated signal as a function of an actual value (64, 66).

10. Method according to claim 9, the unregulated signal being an enhanced signal.

## Revendications

1. Procédé de commande pour un embrayage (16) d'une chaîne cinématique de véhicule (12), un régulateur (34) d'une unité de commande électronique (30) produisant un signal théorique électrique (60, 62) correspondant à une pression théorique (58) avec laquelle l'embrayage (16) doit être alimenté, l'unité de commande (30) obtenant d'un capteur (48) un signal réel (64) électrique devant correspondre à une pression réelle alimentant l'embrayage (16), le capteur (48) mesurant la pression au niveau d'un point de mesure relié à un point d'alimentation (24) par le biais d'un tronçon de transmission (46), l'embrayage (16) étant alimenté avec une pression d'embrayage (P_{K}) au niveau dudit point, **caractérisé en ce que** le signal réel (64) parcourt un maillon de transmission (50) avec une propriété de temporisation avant d'être amené au régulateur (34), pour résoudre le problème selon lequel un tronçon de transmission (46) est disposé de façon dynamique avec des composants à ne pas négliger, entre l'embrayage et le capteur de pression.

2. Procédé de commande selon la revendication 1, le maillon de transmission comportant un maillon PT1 (50).

3. Procédé de commande selon la revendication 1 ou 2, le maillon de transmission comportant un maillon de temporisation (50') simple.

4. Procédé de commande selon l'une quelconque des revendications 1 à 3, la propriété de temporisation du maillon de transmission (50) étant fonction de la température.

5. Procédé de commande selon l'une quelconque des revendications 1 à 4, la propriété de temporisation du maillon de transmission (50) étant fonction de la pression théorique.

6. Procédé de commande selon l'une quelconque des revendications 1 à 5, l'embrayage (16) étant actionné par voie fluide et le signal réel étant un signal de pression (64) d'un capteur de pression (48).

7. Procédé selon l'une quelconque des revendications 1 à 6, le signal théorique (60, 62) étant produit pendant une phase de remplissage (76) de l'embrayage (16) à partir d'un état de base ouvert de l'embrayage (16) en direction d'un point d'engrenage (71) de l'embrayage (16).

8. Procédé selon la revendication 7, le signal théorique (60, 62) étant modulé avec un signal de fréquence plus élevée (dither) (74) afin de minimiser les effets d'hystérèse et le signal théorique (60, 62) étant modulé avec le signal de fréquence plus élevée au moins pendant une section (78) de la phase de remplissage (76).

9. Procédé selon l'une quelconque des revendications 1 à 8, le signal théorique (60, 62) étant produit par l'unité de commande (30) pendant une phase de remplissage (76) de l'embrayage (16) à partir d'un état de base ouvert de l'embrayage (16) en direction d'un point d'engrenage (71) de l'embrayage (16), d'abord (80) sous la forme d'un signal non réglé puis (82) sous la forme d'un signal réglé en fonction d'une valeur réelle (64, 66).

10. Procédé selon la revendication 9, le signal non réglé étant un signal surélevé.
